(19) Europäisches Patentamt / European Patent Office / Office européen des brevets

(11) **EP 3 164 902 B1**

(12) **EUROPEAN PATENT SPECIFICATION**

(45) Date of publication and mention of the grant of the patent:
**09.01.2019 Bulletin 2019/02**

(21) Application number: **15770660.7**

(22) Date of filing: **02.07.2015**

(51) Int Cl.:
**H01M 8/04007** (2016.01)   **H01M 8/04291** (2016.01)
**H01M 8/04119** (2016.01)   **H01M 8/1018** (2016.01)
**H01M 8/1007** (2016.01)

(86) International application number:
**PCT/IN2015/050056**

(87) International publication number:
**WO 2016/001938 (07.01.2016 Gazette 2016/01)**

(54) **INTERNAL HUMIDIFICATION IN LOW TEMPERATURE PEM FUEL CELL BY MEANS OF A WICK**

INTERNE BEFEUCHTUNG IN EINER NIEDERTEMPERATUR PEM-BRENNSTOFFZELLE MITTELS EINES DOCHTES

HUMIDIFICATION INTERNE DANS UNE PILE À COMBUSTIBLE DU TYPE PEM À L'AIDE D'UNE MÈCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.07.2014 IN 1797DE2014**

(43) Date of publication of application:
**10.05.2017 Bulletin 2017/19**

(73) Proprietor: **Council of Scientific and Industrial Research**
**New Delhi 110001 (IN)**

(72) Inventors:
• **PANDEY, Ramendra**
  **Chennai 600113 (IN)**
• **AGARWAL, Harshal**
  **Chennai 600113 (IN)**
• **KUMAR, Ram**
  **Chennai 600113 (IN)**
• **PARTHASARATHI, Sridhar**
  **Chennai 600113 (IN)**
• **BHAT, Santoshkumar**
  **Chennai 600113 (IN)**

(74) Representative: **Zacco GmbH**
**Bayerstrasse 83**
**80335 München (DE)**

(56) References cited:
**US-A1- 2004 170 878     US-A1- 2005 158 593**
**US-A1- 2005 181 264     US-B1- 6 555 262**

• **MASAHIRO WATANABE ET AL: "MANAGEMENT OF THE WATER CONTENT IN POLYMER ELECTROLYTE MEMBRANES WITH POROUS FIBER WICKS", JOURNAL OF THE ELECTROCHEMICAL SOCIETY, ELECTROCHEMICAL SOCIETY, vol. 140, no. 11, 1 November 1993 (1993-11-01), pages 3190-3193, XP000424491, ISSN: 0013-4651**

**Description**

**FIELD OF INVENTION**

The present invention relates to a novel internal humidification technique for low temperature proton exchange membrane fuel cell (LT-PEMFC). More specifically, the invention relates to a wick based passive technique for supply of water directly to the membrane electrode assembly by capillary action which render simultaneous humidification and cooling of PEM fuel cells, with high electrical efficiency.

**BACKGROUND AND PRIOR ART OF THE INVENTION:**

The proton exchange membrane used widely today by most PEMFC stack manufacturers is based on polyflouroethylenesulfonated polymer which requires sufficient levels of moisture content for effective proton transfer from anode to the cathode. Thus, it is needed that the gases supplied to the PEMFC are humidified either externally or internally to maintain the required moisture content in the membrane and to get continuous power output. In conventional systems, humidification of gas streams is achieved through external humidification unit comprising of a membrane (Nafion based) humidifier and water supply. In such a humidifier, liquid water and dry air are fed to either side of the membrane thereby creating a water activity gradient across the membrane. This forces the water to diffuse across the membrane from the water side to the gas side that subsequently evaporates at the membrane/gas interface resulting in humidification of gas. The external humidification system adds to the parasitic power loss apart from adding to the system complexity. The use of humidified gas streams is very critical on both the electrodes. At anode typically, more humidification is required (> 80 %) as the electro-osmotic drag leads to more dehydration at the anode side of the membrane. At cathode, water is produced because of the reaction between the protons and the incoming oxygen. However, the compressed air that is supplied to the cathode is too dry for maintaining proper moisture levels. Thus, some amount of humidification (~50 %) is required for the cathode side stream as well.

More lucrative way of achieving humidification is internally. By supplying water directly to the gas streams in the form of mist (by means of ultrasonic nebulization) or by using water transport plates as bipolar plates for gas flow, one can achieve internal humidification. Former is energy intensive while use of latter normally results in less fuel utilization due to fuel crossover through the plates. In the present method, water is brought in contact directly with MEA by passive wicking action.

US 6,960,404 describes the wicking action over the cathode in the form of channels in order to supply the water inside the cell for internal humidification. The wicking material should be porous and hydrophilic although it does not need to be electrically conducting. However, the drawbacks of such a configuration of fuel cell is that it is difficult to fabricate bipolar plates with wicking materials as channels and also usage of electrically insulating wicking material shall render increased resistance to charge transfer across the cells in a fuel cell stack.

EP 1,530,813 describes a technique for direct supply of water to the bipolar plate channels for internal humidification of membrane. The technique uses an extremely thin metal foil (~40 microns) assembly designed for placing over the top and bottom portions of active area of the flow field plate. The water is supplied to the metal foil directly through a complicated design of bipolar plate. The water when reaches the flow field evaporates into the gas stream thereby humidifying it. The gas that is reacted humidifies the membrane, and the remaining gas is vented to provide cooling. The method though effective, does not alleviate the problem of easy manufacturing globally and works only with metallic plates.

EP 2,016,640 B1 describes a novel bipolar plate design for direct water supply to the metal foil as an extension of their previous patent (EP 1,530,813 B1). The bipolar plate design provides an easy transport of water into the cell but is still quite complicated as it requires significant maneuvering in the bipolar plate design which incurs increment in manufacturing cost.

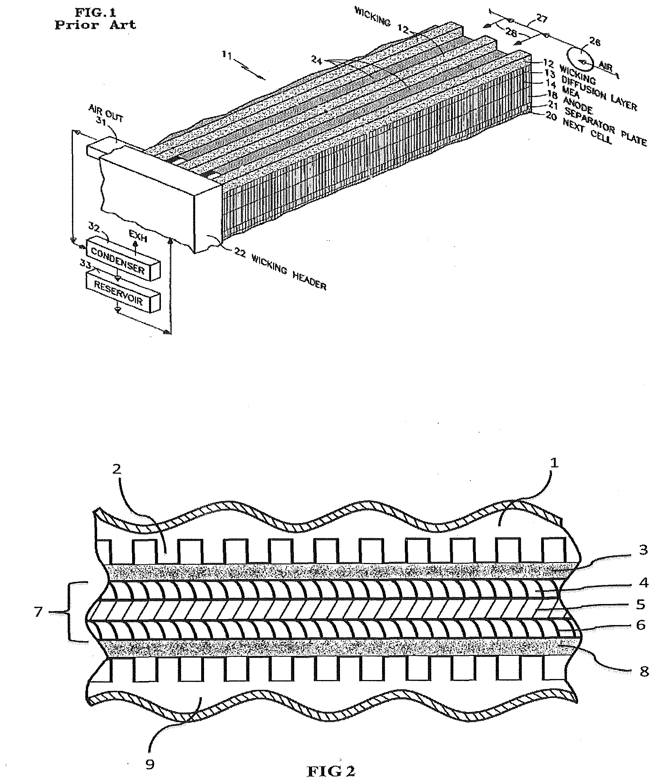

In another form of wicking technique used for In-Situ humidification in PEMFC is shown in US 2004/0170878, which describes porous fibers that can be used as channels for direct water transport into the cell which is briefly illustrated in FIG. 1 herein. A fuel cell (11) has strips of wicking (12) disposed over a diffusion layer (13) which is in intimate contact with the cathode catalyst in the membrane electrode assembly (MEA) (14). The fuel cell (11) includes an anode (18), which in the subject publication is not involved with cooling. The fuel cell is separated from the next cell in the series (20) by a separator plate (21). A similar separator plate is present, though not shown, on the top of the fuel cell as seen in FIG. 1. To provide water to the wicking (12), a wicking header (22) extends across the ends of all of the fuel cells on an end thereof which is opposite to the flow of air into the spaces (24) between the wicking (12) that comprise the oxidant reactant gasflow field. Air is supplied by a pump (26) through a manifold (27) to the inlets (28) of each fuel cell. In FIG. 1, the air flow is exhausted through an outlet header (31) to a condenser (32) which vents the air to exhaust and delivers the condensate to a reservoir (33). Water in the reservoir 33 is conducted to the wicking header (22).

The wicking evaporative cooling described in the aforementioned publication is stated to require external water, from a source outside the fuel cell power plant, since the water generated at the cathode (process water) is said to be insufficient, except at startup, to achieve the necessary cooling. This is also true in an evaporatively cooled fuel cell stack which relies on wicking as in US 4,826,741. Therein, 100 $cm^2$ cells have performance of only 0.7-0.8 V at 100-120 $mA/cm^2$ (108-130 $A/ft^2$).

In view of the aforesaid problems of prior art, current work was undertaken by the inventors to propose use of an electrically conducting & porous material for its ability to provide direct membrane humidification using several configurations of wick based 100 $cm^2$ PEM fuel cell setup. The same was later extended to a 5-cell PEM stack to check for the scalability of this technique and was found to be performing with high efficiency.

## OBJECTS OF THE INVENTION

The main object of the present invention is to provide a method of retaining the water content in the membrane during the operation of fuel cell by developing a cost-effective humidification technique in Low temperature Proton Exchange Membrane Fuel Cell (LT-PEMFC), that would be easy to scale up and avoid system complexity.

Another object of the present invention is to provide a passive means of water transport into the cell thereby reducing the parasitic power loss which is normally incurred by conventional fuel cell systems.

Still the main objective of the present invention is to increase the hydrophilic nature of the wicking material by treatment with acetone.

Yet another objective of the present invention is to provide a water supply process in the form of a trough that should be placed at the bottom of the fuel cell/stack.

In still other objective, the present invention would facilitate cooling of fuel cell stack in operation thereby reducing the parasitic power loss incurred by the conventional cooling systems.

## SUMMARY OF THE INVENTION

The present invention is defined in claim 1 and deals with electrically conducting, porous and hydrophilic layer of carbon cloth modified by acetone treatment of thickness less than 1mm being used as a wicking material for water management in PEMFC. The invention therefore provides for water to be sorbed through capillary action in the wicking material. The presence of wicking material adjacent to the MEA facilitates for the moisture content required by the membrane for effective proton transport from anode to cathode.

Accordingly, the present invention provides a fuel cell setup comprising the wicking material placed over the gas diffusion layer. The dry gas while passing through the flow field takes up the water from the porous wick surface and gets humidified. It is further advantageous in some fuel cell configurations to have the gas flow in the direction of capillary action (co-flow mode) to bolster the water transport up the wick. The technique reported in this invention exhibited improved cell performance in comparison with conventional humidification technique under cell temperatures of around 55-60 °C. The technique when tested on a 5-cell stack worked as good as conventional fuel cell system when the wick was placed over the cathode. Thermal management was more incumbent in case of stack.

The technique of the invention facilitates cooling with stable performance under constant load conditions. Thermal management studies back up the results.

Efficiency of stack as per the invention was found to improve with inlet down configuration resulting in cooling of 16.5 W at 500 $mA/cm^2$ current density.

Overall cooling achieved as per the invention was 8.15% out of the total 202.5 W available heat.

Maximum cooling of approximately 11 % is achieved at a current density of 300 $mA/cm^2$ with co-flow configuration. Even with this much amount of cooling, net parasitic load could be reduced considerably from the cooling circuit.

## BRIEF DESCRIPTION OF THE FIGURES

For a better understanding of the present invention, and to show more clearly how it may be carried out into effect, reference will now be made by the accompanying Figures, which show the preferred embodiments of the present invention.

FIG 1: Prior art showing porous fibers that can be used as channels for direct water transport into the cell

FIG 2: Schematic sectional view of the fuel cell 1 setup with wick 3 and 8.

FIG 3: A schematic sectional view of a 4 cell stack is presented for elucidation of the present invention when incorporated on both sides of the MEA and how it will work in case of a fuel cell stack.

FIG 4: A schematic sectional view of a 4 cell stack is presented for elucidation of the present invention when incorporated on cathode side.

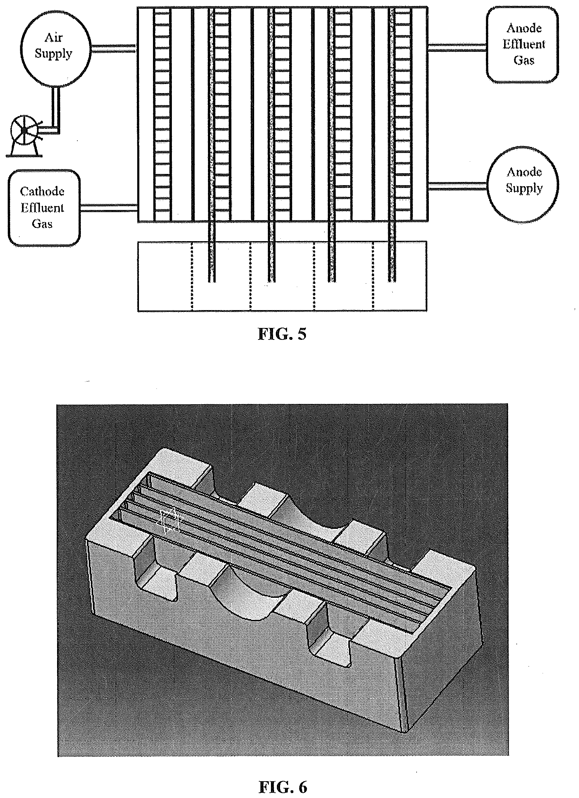

FIG 5: A schematic sectional view of a 4 cell stack is presented for elucidation of the present invention when incorporated on anode side.

FIG 6: A 3D schematic of Trough as used in the invention.

FIG 7: Wick characterization: (a) Pore diameter vs. differential air pressure across the wick, (b) Gas permeability through wick vs. differential air pressure across the wick, (c) Contact angle measurement and (d) TGA/DSC plot for variation in mass % and heat flow with respect I to temperature. The error bars represent the standard deviation values for a data set of average pore diameter and gas permeability.

FIG. 8: Polarization curves for different single cell configurations at $\lambda_{H_2}$ = 1.2 and $\lambda_{Air}$ = 3 : (a) Counter-flow mode and (b) Co-flow mode. Error bars represent the standard deviation values obtained for the set of experiments performed for each configuration.

FIG.9: Nyquist plots under counter-flow mode: (a) configuration-A (b) configuration-B (c) configuration-C and (d) configuration-D. Experimental data (o) and simulated curve (□) are compared for their Ohmic resistance and charge transfer resistance values, which are the major losses incurred in the experimental setup.

FIG. 10: Nyquist plots under co-flow mode: (a) configuration-A (b) configuration-B (c) configuration-C and (d) configuration-D. Experimental data (o) and simulated curve (□) are compared for their Ohmic resistance and charge transfer resistance.

FIG. 11: Temperature profile of the stack at 0.5 A/cm$^2$ load condition.

FIG. 12: Voltage profile for 0.5 A/cm$^2$ load condition wherein the voltage variations were recorded till the end plate temperatures reached 50 °C.

FIG. 13: Polarization curves for a 5 cell stack in Counter-flow and Co-flow mode.

FIG. 14: Efficiency versus current density for a 5-cell stack.

## DETAILED DESCRIPTION OF THE INVENTION

In order to achieve the objectives of the current invention, the inventors have provided a novel approach for cost-effective in situ humidification of the membrane in LT-PEMFC.

According to the invention, the technique makes use of principles of evaporative cooling, capillary action in electrically conducting, porous and hydrophilic layer of size less than 1mm to supply the water directly into the cell for humidification of membrane internally.

In accordance with the invention, the hydrophilic character of the wicking material is further increased by treatment with acetone or Tin oxide dispersion treatment.

It is known that for optimal performance of fuel cell, water management in crucial. The membrane should neither get dried up due to electro-osmotic drag nor should the cathode get flooded due to excessive water production at high current densities. Flooding is usually not a problem on the anode except for operation at lower current densities. In general, auxiliary components like humidifiers and pumps are used for achieving the required humidity of reacting gas streams resulting in increased parasitic power loss, increased cost and complexity of system.

The present invention aims at providing an easy to scale up passive technique for humidification in LT-PEMFC while avoiding introducing any complexity to the existing design of proton exchange membrane (PEM) fuel cells, while providing overall high efficiency also. Almost all of the techniques being used in the prior art address water management at the cathode with or without dry feed operation and do not consider water management over the anode using such methodologies. Moreover, inventors extend the fuel cell area to 100 cm$^2$, which has not yet been studied with existing wick-based techniques. Therefore, the present study deals with the use of an electrically conducting & porous material for its ability to provide direct membrane humidification using several configurations of wick based 100 cm$^2$ PEM fuel cell set-up. According to the current invention as in FIG 2, fuel cell (1) includes a Membrane Electrode Assembly (MEA) (7) consisting of an anode (4), cathode (6) and a sulphonated polyflouroethylene membrane (Nafion) (5). The MEA (7) is sandwiched between the flow field plates (9) consisting of several gas transfer channels (2). Just between the MEA 7 and the flow field plates (9), there is layer of wicking material (3) and (8) in the form of carbon cloth of minimum thickness, high electrical conductivity and with high hydrophilic nature. The wicks (3) and (8) helps transport the water to different portions of the MEA's (7) active area. This helps in uniform maintenance of moisture levels across the entire active area.

According to the invention, the wicking material has pore size in accordance to the invention is in range of 25 - 94 $\mu$m and size of 0.2-1 mm.

According to another embodiment of the invention the wicking material has thermal conductivity of more than 2 W/m.K and electrical resistivity < 500 mOhm-cm.

According to the invention the electrically conducting film includes but is not limited to carbon cloth and metal foam sheets. The carbon cloth in its dry form is more permeable to gas transport while in wet form offers increased resistance to the gas transport. Despite then, no reduction in performance of the fuel cell has been observed.

According to the invention the average contact angle of the wicking material/ carbon cloth is 77 degrees.

According to the current invention as in FIG 2, fuel cell (1) includes a membrane electrode assembly (7) consisting of an anode (4), cathode (6) and a sulphonated polyflouroethylene membrane (Nafion) (5). The MEA (7) is sandwiched between the flow field plates (9) consisting of several gas transfer channels (2). Just between the MEA 7 and the flow field plates (9), there is layer of wicking material (3) and 8 in the form of carbon cloth of minimum thickness, high electrical conductivity and with high hydrophilic nature. The wick (3) and (8) helps transport the water to different portions of the MEA's (7) active area. This helps in uniform maintenance of moisture levels across the entire active area. According to the current invention, a trough is used for water transport up the wicking material used. It is important that no two wicks come in physical contact with each other in order to prevent short circuiting. According to the invention, the trough has been designed to provide separate compartments for water transport for each electrode in the fuel cell.

The trough design should comply with the water requirements for consistent and stable fuel cell performance. Thus, the trough should be designed in order to accommodate a minimum quantity of water at all times depending of fuel cell power. The height and compartments dimension can be adjusted accordingly. It should be noted that the portion of the wick which is out of the fuel cell needs to be dipped as much in water as possible for better wicking action. It is important that the material chosen for fabrication of trough is electrically insulating and can hold sufficient amount of water in order to operate the fuel cell for longer duration without the need of refill.

In accordance with the embodiments of the invention, de-ionized water has been used for water transport as it offers reduced electrical conductivity and is important to prevent transfer of ionic impurities into the cell for better durability of MEAs. The flow rate of reactant gases to be used should take into account the differential capillary pressure and the wicking velocity. The stoichiometry should be considered to provide the maximum wicking velocity for a particular wicking material.

According to the invention, the gas can be supplied either in counter-flow mode or co-flow mode in order to facilitate or prevent wicking action. In configurations wherein only anode or cathode is being internally humidified, the other electrode is supplied with the conventional counter-flow mode.

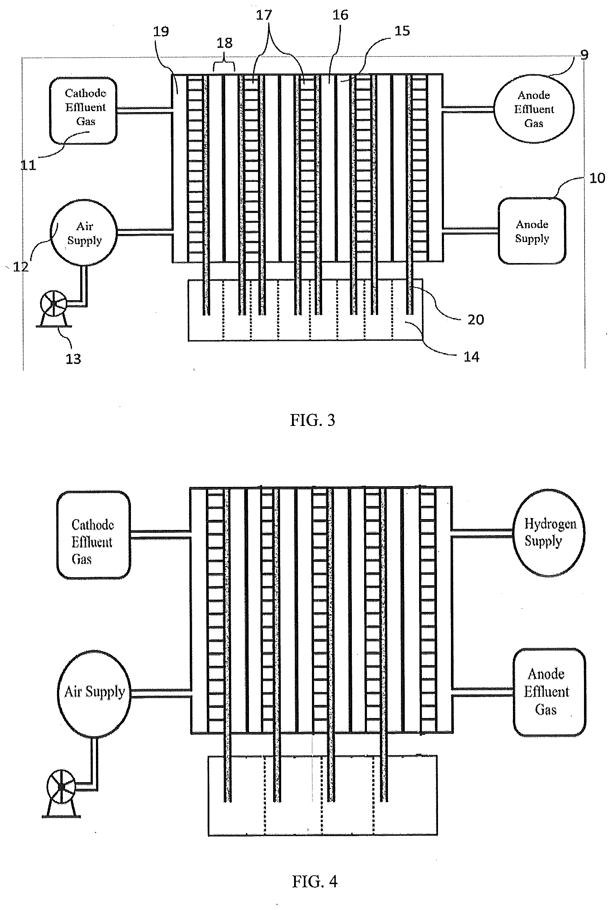

According to the invention, hydrogen is supplied as shown in FIG 3, through a compressed hydrogen tank (9) which flows through the bipolar flow field plates (17) in the stack. Air is supplied through a fan/blower (13) towards the cathode (16) of the stack. The plates distribute the hydrogen over the anode (15) and air/oxygen over the cathode (16). The gases in the preferred embodiment has to cross the wet porous wick surface (20) which is continuously kept wet through capillary action when the bottom portion of the wick is dipped in the trough (14), which is the water reservoir. The advantage of this passive technique of water transport is that parasitic power loss is significantly reduced.

According to the present invention, there may be four different configurations of a PEMFC system depending on the placement of the wicking material on cathode or anode or both. It is known that humidification in PEMFC is more critical over the anode because of electro-osmotic drag. However, small amount of humidification (~50 %RH) is still necessary on the cathode in order to avoid much reduction in partial pressure of oxygen. Thus, the present invention was tried with four different configurations. The configuration without the wick was used as control. In other configurations, the wick was placed over the cathode or anode or both and was dipped in the trough placed at the bottom of the fuel cell setup. The respective electrode(s) with wick were fed with dry gas with 0% RH for fuel cell operation and the performance was recorded using the polarization technique. All the experiments were performed at ambient pressure and 55 °C on a serpentine flow field based fuel cell setup.

Electrically conducting hydrophilic layer as used in the invention has adhesive interactions with water molecules. The adhesive forces have to be greater than the cohesive forces between different water molecules for them to produce capillary action. In these terms, the contact angle determines which force is dominant. Lower the contact angle more is the wetting energy and so is the adhesive force thereby facilitating the capillary action. Water molecules are absorbed through the voids of the cloth so that when the dry gas passes through it, it takes with it the required moisture for the membrane.

While the above description constitutes the preferred embodiments, it is noteworthy that the present invention is susceptible to modifications and changes without departing from the fair meaning of the proper scope of the accompanying claims. For example, a wide variety of electrically conducting and hydrophilic fabrics or extremely thin metal foam meshes can be employed. As will be appreciated by those skilled in the art, the requirement for humidification is dependent on the type of wicking material used, its pore size distribution, electrical conductivity and hydrophilic nature.

The novelty of the invention lies in the concept of wick-based humidification is derived based on the principle of evaporative cooling, which can render simultaneous humidification, and cooling of proton exchange membrane (PEM) fuel cells. Entire process is psychrometry of air-water system. The work encompasses studies at two phases, one at single cell level and then at 5-cell stack level. The single cell studies were performed with all the possible configurations that one can have for this technique. The water produced at the cathode is found to be sufficient for stable flood-free performance under dry air feed in configuration-C. Compact arrangement of trough in the present study can also facilitate wick based humidification at the anode (configuration-B) giving a peak power density of 409 mW/cm$^2$ in co-flow mode which is nearly equal to the peak power density of 408 mW/cm$^2$ in case of control. Configuration-D does not show performance comparable to configuration-A in both the flow modes. Temperature and voltage profiles for the configuration-C in a 5-cell stack were obtained and compared with the control. The maximum cooling that could be achieved was close to 16.5 W for a total available heat of 202.5 W

## EXAMPLES

***The following examples are given by way of illustration and therefore should not be construed to limit the scope of the present invention.***

### Example 1:

### Measurement of material parameters useful for wicking action and thermal stability:

Pore size distribution, gas permeability and contact angle play an important role for wicking action to take place in a porous hydrophilic material. It also gives an idea about the possibility of flooding of electrodes due to excess wicking. In order for wick to supply water to the fuel streams internally, it is essential that a positive wicking velocity be continuously maintained. Hence, optimum pore size distribution and permeability are critical for flood-free cell performance. Wicking action is in turn determined by using two important factors namely differential capillary pressure and wicking velocity. Differential capillary pressure ($dP_{cap}$) is a function of surface tension of water, contact angle and pore diameter, whereas wicking velocity depends on the difference between $dP_{cap}$ and differential flow field pressure ($dP_{flowfield}$), permeability, viscosity of fluid and channel length. Average pore size, air flow rate and permeability through the wick were measured in relation to varying differential air pressure. Sessile drop method was used to measure the contact angle over the wick surface. Thermal stability of the wicking material was studied for a temperature range of 30 °C to 250 °C using a Thermo-gravimetric analyzer (TGA).

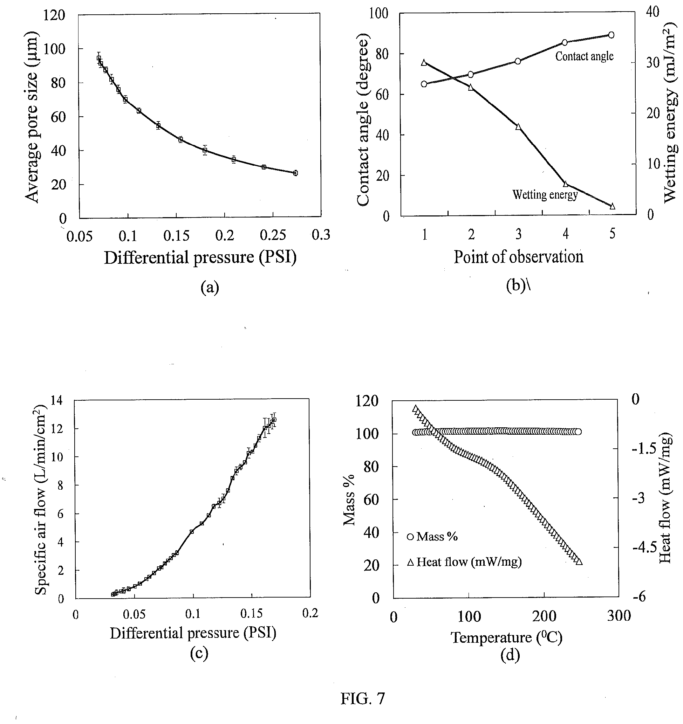

FIG 7 (a & c) show the average pore diameter and gas permeability of the wick in relation to differential air pressure, respectively. Lower pore diameters as well as higher gas permeability were measured at higher differential air pressures across the wick because of the increase in capillary displacement of the fluid. The average pore size in relation to varying differential pressure was found to be in the range of 25.7 to 94.5 $\mu$m for the wick with an average pore diameter of 61 $\mu$m, while the average permeability value was found to be 25 Darcys. FIG 7 (b) shows the contact angle data for a 5 x 5 cm$^2$ area wick at five different locations. The pattern suggests that the contact angle varies with respect to location due to the variation in pore size distribution. The average contact angle was found to be 77 degrees.

It is important that the wicking material used for water transport be thermally stable for the PEMFC temperature operation range. In general, wicking materials like cotton loose about 5 - 7 % of their mass in the temperature range of 30 - 250 °C. Hence, long duration operation with such wicking materials is not likely to provide stable performance. From FIG 7 (d) of TGA/DSC (Differential scanning calorimetry), no loss in mass percentage was observed for the entire temperature range. Heat flow pattern was found to be consistent with increase in temperature and no peaks indicating absence of any sort of phase transitions in this temperature range. The material was thus found stable for the entire range of fuel cell temperature.

### Example 2

### Description of experimental configurations (A - D)

**Table 1**

| | Configuration A | Configuration B | Configuration C | Configuration D |
|---|---|---|---|---|
| **Placement of wick** | No wick | Over anode | Over cathode | Over anode and cathode |
| **External water supply to wick** | No | Yes | Yes | Yes |
| **Flow mode at anode** | Counter | Counter / Co-flow | Counter | Counter / Co-flow |
| **Flow mode at cathode** | Counter | Counter | Counter / Co-flow | Counter / Co-flow |
| **Means of humidificatio n at anode** | Bubble humidifier | Through wick | Bubble humidifier | Through wick |
| **Means of humidificatio n at cathode** | Bubble humidifier | Bubble humidifier | Through wick | Through wick |
| **Feed at anode** | Humidified | Dry | Humidified | Dry |
| **Feed at cathode** | Humidified | Humidified | Dry | Dry |
| **Inlet fuel temperature (°C)** | 50 - 52 | 28 - 30 | 50 - 52 | 28 - 30 |
| **Inlet oxidant temperature (°C)** | 45 - 47 | 45 - 47 | 28 - 30 | 28 - 30 |

## Example 3

**Control experiment for fuel cell performance (Configuration-A)**

Configuration-A corresponding to the control single cell setup with external humidification of gases was taken as the base line performance for comparison with other configurations which make use of wick for internal humidification. The cell was supplied with 80 %RH at the anode and 50 %RH at the cathode. The humidification levels were maintained by controlling the humidifier temperature and gas line temperature. The gas line temperature was maintained at 60 °C for both anode and cathode. The humidifier temperature was maintained at 50 °C for anode and 45 °C for cathode. Galvanostatic polarization curve was recorded after cell stabilization for 6 - 8 h. The stoichiometry used for all tests was 1.2 for anode and 3 for cathode.

## Example 4

**Anode side internal humidification experiment with cathode side externally humidified (Configuration-B)**

Configuration-B corresponds to the single cell setup with the wicking material over the anode of the MEA. The wicking fabric extends out from the bottom of the cell and dips inside the trough containing water. The fabric starts distributing the water through its voids by capillary action. The anode is operated with counter-flow and co-flow modes in the fuel cell. The cathode is supplied with gas only in counter-flow mode. In this configuration, the fuel cell was supplied with 50% humidity at the cathode while the anode was supplied with dry stream of hydrogen gas (0 %RH). Galvanostatic polarization curve was recorded after cell stabilization for 6 - 8 h. The stoichiometry used for all tests was 1.2 for anode and 3 for cathode.

## Example 5

**Cathode side internal humidification experiment with anode side externally humidified (Configuration-C)**

Configuration-C corresponds to the single cell setup with the wicking material over the cathode of the MEA. The wicking fabric extends out from the bottom of the cell and dips inside the trough containing water. The fabric starts distributing the water through its voids by capillary action. In this case, cathode is operated with counter-flow and co-flow modes while the anode is operated only with counter-flow mode. In this configuration, the fuel cell was supplied with >80% humidity at the anode while the cathode was supplied with dry stream of air (0% RH). Galvanostatic polarization curve was recorded after cell stabilization for 6 - 8 h. The stoichiometry used for all tests was 1.2 for anode and 3 for cathode.

## Example 6

**Both Anode and Cathode internal humidification experiment (Configuration-D)**

Configuration-D corresponds to the single cell setup with the wicking material over both sides of the MEA. In this configuration the cell was dry fed with anode and cathode gas streams and was allowed to provide internal humidification through wicking action. Galvanostatic polarization curve was recorded after cell stabilization for 6 - 8 h. The stoichiometry used for all tests was 1.2 for anode and 3 for cathode.

## Example 7

**Thermal management experiment with Configuration-C used in a 5 cell stack**

As an extension to the capability of this technique, thermal management studies were conducted to study the performance with configuration-C using a 5 cell stack. The stack was built with wick placed over the cathode for all 5 cells. The stack was fed with dry air (0 %RH) at the cathode and > 85 %RH over the anode. The stoichiometry was kept constant for all tests at 1.2 for hydrogen and 3 for air. Temperatures were measured at the two end plates using thermocouples. The temperature and voltage profile were measured with increase in time. The test was terminated beyond 50 °C end plate temperature. The tests were repeated for multiple load conditions of 200-500 mA/cm$^2$. Finally polarization curves were obtained, with cut off voltage being 1 V. Finally, the results obtained for configuration-C in co-flow and counter-flow modes were compared with the control setup (without cooling).

## Example 8

**Fuel cell test setup**

In situ humidification experiments were carried out on a 100 cm$^2$ single cell setup. Hydrogen Screener Membrane Electrode Assembly (MEA-5 layer), Active Area 100 cm$^2$ was procured from Alfa Aesar, Johnsan Mattey Pvt. Ltd., India. AvCarb carbon cloth procured from Nikunj Exim Pvt. Ltd. was used for all the tests. All the tests were conducted on BioLogic fuel cell test station with a load capacity of 140 A and voltage range of 0-5 V.
Apparatus for single cell experiments include:

  ➢ BioLogic fuel cell test station with load carrying capacity.

  ➢ Two gas lines for anode and cathode.

  ➢ Thermocouple for temperature measurement (provided along with Biologic instrument)

  ➢ Built in humidification unit in BioLogic fuel cell test station.

  ➢ Hydrogen and Air gas cylinders.

  ➢ Connecting tubes

  ➢ Closers

  ➢ 100 cm$^2$ single cell setup including two end plates, two current collector plates, 1 MEA, gaskets and two monopolar graphite plates with serpentine flow field (7 channels, 7 passes).

  ➢ Trough for single cell and 5-cell setup for holding water.

  ➢ A wooden stand

All the above mentioned components together make up the complete setup for single cell experiments.
Based on the configurations, experiments were carried out for a 100 cm$^2$ single cell keeping all the parameters constant except for the placement of wicking material and flow of gases in the co-flow or counter-flow scenario. The studies were systematically conducted wherein at first control (Configuration-A) setup was tested with all conventional units and was taken as benchmark for comparison with other configurations (B, C and D). Thus, any deviation from the performance obtained in the control experiment was attributed to be (i) due to the presence of cloth over the MEA (ii) dry and ambient feed of gases (iii) water wicked at ambient temperature and (iv) change in flow mode of gases. The performance in any case was quantified by means of a polarization curve and the effect of adding the cloth was tested by means of electrochemical impedance spectroscopy.

**Polarization Studies**

The polarization data for the single cell was obtained at 55 °C at varying load current densities with hydrogen stoichiometry of 1.2 and air stoichiometry of 3, set for a current density of 0.8 A/cm$^2$. The tests were carried out using counter-flow and co-flow modes.

*Counter-Flow Mode:*

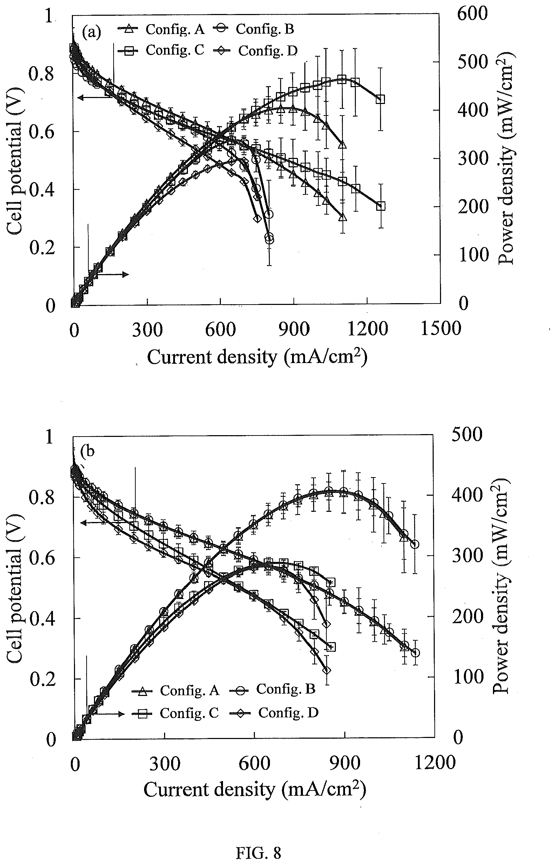

FIG 8a shows the cell polarization curves for all the configurations (B, C and D) under counter-flow mode in comparison with configuration-A which by default is operated in counter-flow mode. The curves are represented along with their standard deviation (SD) error bars obtained from set of experiments performed for each configuration. The bars represent 1 SD for each data point recorded. The comparison suggests that the open circuit voltage (OCV) remains unaffected in various configurations and stabilizes at about 0.9 V. In case of counter-flow mode of experiments, the wicking action is resisted by the opposing gas flow as predicted by theoretical calculations. This resistance is even more predominant if the gas flow rates are high as in case of configuration-C and therefore, might even stop capillary action completely. The control setup (configuration-A) after equilibration could give a maximum power density of 407 mW/cm$^2$. The potential drop at high current densities above 900 mA/cm$^2$ is due to mass transfer limitations, as the flow rate was set for a load of 0.8 A/cm$^2$. Small amount of water was wicked up in case of Configuration-B even under the counter-flow mode where the maximum power density was restricted to only 344 mW/cm$^2$. This was mainly due to increased gas diffusion resistance provided by the wet wick and can also be attributed to the dry feed of hydrogen which can lead to increase in membrane resistance despite the wicking action in counter-flow mode. In case of configuration-C, the maximum power density was measured at 465 mW/cm$^2$. This was expected, as the air stoichiometry was kept sufficiently high which would prevent any significant gas diffusion resistance and the water produced at the cathode was more uniformly distributed by the air flow over the wick thereby preventing any flooding events over the cathode.

*Co-Flow Mode:*

FIG 8b shows the polarization curves along with their standard deviation error bars obtained for configurations-B, C & D under co-flow mode and are compared with configuration-A. In this mode, all the configurations with wick undergo enhanced capillary action in comparison to counter-flow mode. Here, configuration-B could match the performance of the control configuration-A and gave a maximum power density of 409 mW/cm$^2$ which is attributed to the enhanced capillary action in the co-flow mode thereby providing sufficient water to the membrane for good proton conductivity. Flooding at anode is possible at low current densities (< 300 mA/cm$^2$) where the back diffusion from cathode is predominant. Configuration-C was found to give maximum power density of nearly 284 mW/cm$^2$, which was much lower than its performance observed in counter-flow mode. This can only be attributed to the possibility of flooding due to excess water transport and/or sluggish ORR kinetics due to ambient air temperature, which was fed to the cathode. Configuration-D which is a combination of configurations-B & C, did not observe any significant variation in performance from the counter-flow mode and gave a maximum power density of 285 mW/cm$^2$. The most critical reason for lower performance of configuration-D is the high gas diffusion resistance provided by the wet wick on both sides of MEA along with dry and ambient temperature feed of gases, which leads to slower reaction kinetics at the electrodes, especially at the cathode.

**Electrochemical Impedance Spectroscopy Studies:**

Electrochemical impedance measurement studies were conducted after every polarization study. All the parameters were kept constant as were used for polarization studies. Only the program in BioLogic fuel cell test station was changed to perform impedance spectroscopic analysis for the cell. Frequency range was set at 0.1 Hz to 10 kHz and voltage was kept at 0.6 V which lies in the normal operating voltage range of fuel cell. Nyquist plot was then recorded within the frequency range for every configuration.

*Counter-Flow Mode:*

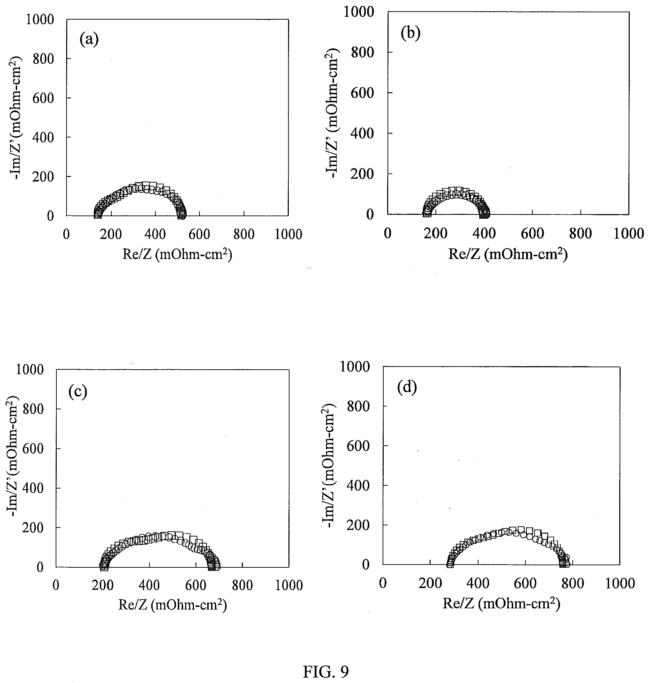

Impedance spectroscopy is a powerful tool for understanding the behavior of an electrochemical system. In general Nyquist and Bode plots are used to give the complete information for any impedance spectroscopy measurements. Where Nyquist plot gives the details of the real and imaginary parts of overall impedance, Bode plot gives the system's frequency response. FIG 9 (a - d) shows the Nyquist plots for different configurations under counter-flow mode along with their simulated curves. The Ohmic resistance is measured at the intersection of the curve at the high frequency intercept of the real axis while the charge transfer resistance is measured as the difference in the real axis intercepts at low and high frequency ends. Understandably, the Ohmic resistance, which is predominated by membrane resistance, is found to vary among different configurations due to the variation in amount of water supplied to the membrane in each configuration. Also, it is obvious that the addition of wick over the active area in a fuel cell would add its internal resistance to the electron transfer within the cell and thereby would reflect in an increase of Ohmic resistance. For instance, for a 10 cm long carbon cloth and an electrical resistivity of 1.1 mOhm-cm, area specific resistance would be equal to 11 $mOhm-cm^2$, which is a very small value in comparison to the overall Ohmic resistance of the fuel cell. Therefore, in this work, the increase in Ohmic resistance is attributed majorly to the change in membrane resistance, which is dependent on moisture content of the membrane. As expected, configuration-A offers the least Ohmic resistance followed by Configurations-B, C & D. A small increase in Ohmic resistance in case of configuration-B is attributed to the presence of wick as well as to the small capillary rise in the wick in counter-flow mode, which could not provide sufficient water to the membrane through wick. The trend however is in good agreement with the polarization data where performance of A is maximum followed by B & C which give close to 300 $mW/cm^2$ at 0.6 V. It is noted that both the Ohmic and charge transfer resistances observed and estimated are in good agreement. The variations seen in the charge transfer resistance are attributed to the electrode kinetics, which are temperature dependent and are likely to be affected by membrane hydration levels as well. In addition, it is possible for the water accumulated at the cathode to block the pores of the wick and thereby result in flooding event, which can also cause a change in the charge transfer resistance. Hence, it can be seen that in configuration-C & D where the cathode is fed with air at ambient temperature and where dehydration effect is also observed (marked by the shift in the high frequency intercept); the charge transfer resistance is found to be much higher. The same is not seen in case of configuration-B as the hydrogen oxidation reaction (HOR) kinetics are much faster even at lower temperatures as compared to oxygen reduction reaction (ORR).

*Co-Flow Mode:*

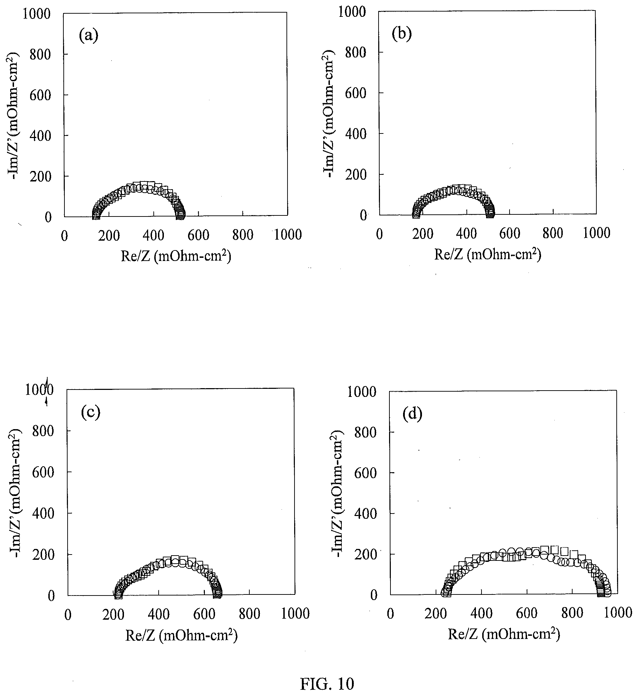

For the co-flow mode, Figure 10 (a - d) shows the Nyquist plots for different configurations along with their simulated curves. Since enhanced wicking action is expected in co-flow mode, the Ohmic resistance is found to decrease in case of configurations-C & D while configuration-B does not reflect significant variation in Ohmic resistance from the counter-flow mode. The increasing order of Ohmic resistance remains as configuration-A followed by B, C & D respectively, which is in accordance with the polarization data. In case of charge transfer resistance, configurations-B & D experienced significant increase from that obtained in counter-flow mode. This is again attributed to the electrode kinetics, which are affected by the ambient temperature of fuel or oxidant supplied to the fuel cell and possibly due to water rising up the wicking material at ambient temperature.

**Thermal management for 100 $cm^2$ 5-cell stack:**

Thermal management is an important aspect of this study. It is confirmed from the single cell humidification experiments that the technique is capable of providing in situ humidification in all configurations and even better performance as compared to the conventional cell setup with configurations B and C. Therefore, for thermal management studies which were conducted with a 5-cell stack, only configuration A and C were tested to establish a valid comparison between a non-cooled stack (configuration A) and stack with wick at cathode (configuration-C). The tests were conducted with both counter and co-flow modes. It was therefore established by means of temperature and voltage profile that the stack with wick had better thermal management ability as compared to non-cooled stack.

**Building of Stack:**

The stack based on configuration-C was built by placing carbon cloth carefully in between every cathode of the MEAs and flow field plate within the 5-cell assembly. The stack was built using four bipolar and two monopolar plates with serpentine flow field. Five new 100 $cm^2$ MEAs were used for thermal management experiments. All the graphite plates used were procured from M/s Schunk Kohlenstofftechnik GmbH, Germany. No cooling plates were added into the stack. All the remaining components were kept same as in the case of single cell experiments.

**Temperature Profile Comparison:**

In order to determine that cooling has occurred using the proposed technique, it is imperative to determine the temperature profile of the stack with time under a given load condition. In order to simulate real time practical conditions, the tests were conducted under ambient conditions with room temperature close to 30 °C. All the ceiling fans in the testing room were switched off during the experiments in order to avoid major forced convective heat transfer from the periphery of stack to the atmosphere. Tests were conducted for configuration A and C only. Stack was operated under constant load conditions of 20, 30, 40 and 50 A respectively, with anode side humidification kept above 80% at all times for both the flow modes. The load was given by means of a load box (Bitrode LCN power module). Cathode was fed with dry air (0% RH) for configuration-C and with 50% RH for configuration A. The humidification setup for stack comprises of two water baths, two pumps and two PermaPure humidifiers (model FC 300-1660-10LP). For control, the water bath temperatures were set at 55 °C for anode humidification and 45 °C for cathode humidification. The water from the baths was circulated into the humidifier by means of peristaltic pumps. The humidifiers were fed with counter flow of gas and water. The gas outlet of humidifier was connected to the inlet gas port of the fuel cell stack. Since, the gas line was open to atmosphere; the gas outlet of humidifier was kept close to the inlet of stack in order to prevent any loss in water vapor in the condensation process. In case of configuration-C, a humidity sensor was attached to the cathode outlet in order to quantify the relative humidity and temperature of the dry gas after passing through the flow field. Temperature was measured at both the end plates by means of two thermocouples and was recorded manually at every 20 seconds interval. Stack temperature was taken as mean of the two temperatures. The tests were terminated once the end plate temperatures reached 50 °C. However, it has to be understood that the actual cell temperature over the active areas of the MEA can be 5-7 °C higher than the temperature measured at the end plates.

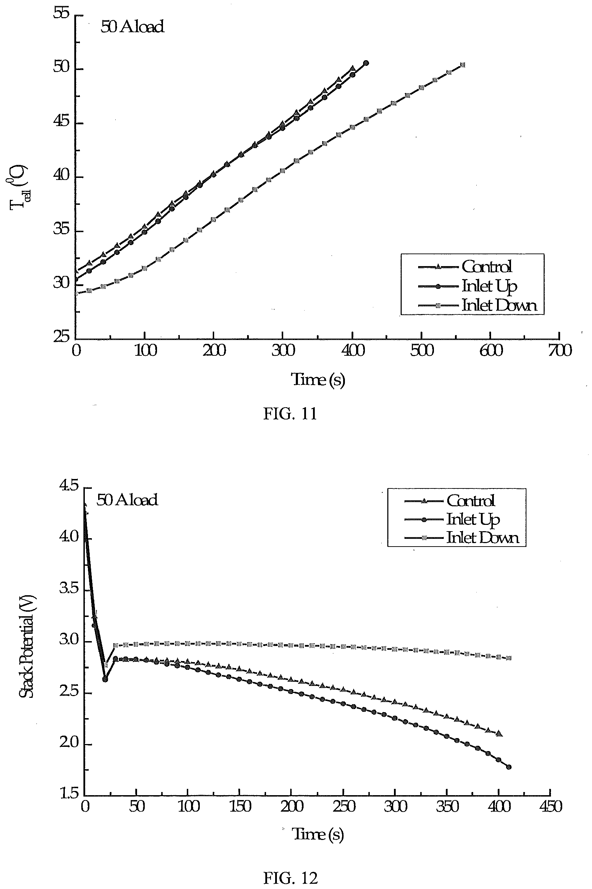

Temperature profile of the stack was measured at the two end plates. The temperature profile of the stack measured between room temperature and 50 °C would give a clear perspective on cooling ability of the stack. The pattern of rise in temperature at different load conditions give a clear idea of the amount of cooling that is achieved through incorporation of wick at the cathode. FIG 11 represents the temperature profile of the stack at 0.5 A/cm$^2$ load condition which can be considered as high current density operation. The figure clearly suggests that the temperature rise is much steep in case of non-cooled stack as compared to the inlet down configuration. Counter-flow configuration did not yield much improvement in managing the stack temperature, due to resisted wicking action. Similar pattern was observed in case of other load conditions of 0.3, 0.4 and 0.5 A/cm$^2$. The much less steep rise in temperature profile of the stack with co-flow mode is due to the wicking action wherein water at room temperature enters the stack and evaporates into the hot dry stream of air that flows over the carbon cloth thereby producing cooling effect. In case of counter-flow, the wicking action is unsupportive. Therefore, the temperature profile in this configuration is more or less similar to non-cooled stack.

**Voltage Profile Comparison:**

The experimental setup and different parameters were kept similar to the ones kept for temperature profile study. In these experiments, stack voltage was recorded for the stack temperature rise from room temperature to 50 °C. The voltages were recorded for load conditions (20, 30, 40 and 50 A) similar to the temperature profile experiments. The purpose of this experiment is to establish the stability of voltage with rise in temperature of fuel cell stack.

It is important that the performance is maintained while the stack reaches its operating temperature. Since, stack was operated at ambient pressures, the stack temperature was kept below 60 °C. Voltage profile gives a clear picture of the stack performance with increase in temperature. A stable voltage for longer duration of operation indicates a better performance. FIG. 12 shows the voltage profile for 0.5 A/cm$^2$ load condition wherein the voltage variations were recorded till the end plate temperatures reached 50 °C. From the figure it can be understood that the voltage profile for the inlet down configuration remained much better than other configurations.

**Polarization Curve:**

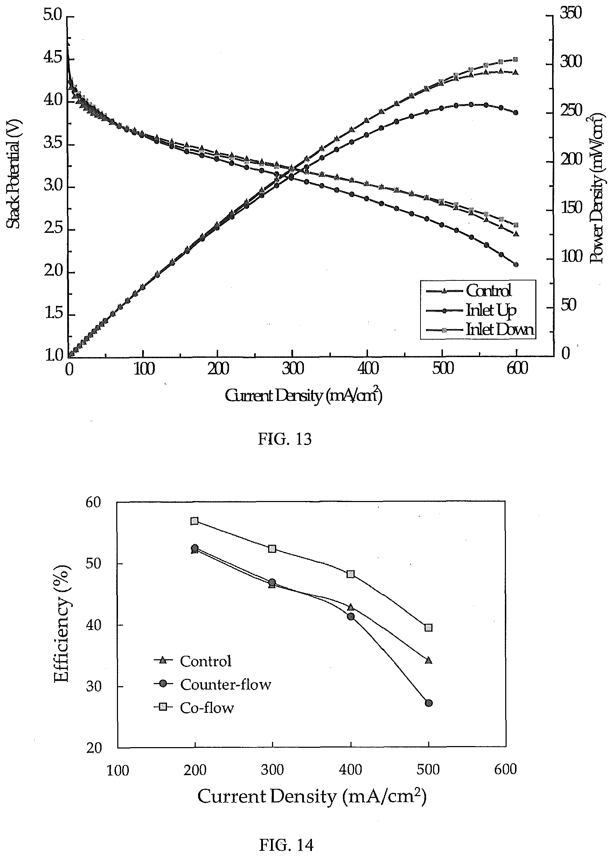

Polarization curves for stack configurations were obtained by recording the stack voltage for increasing current density. The current density was increased in steps of 10 seconds each starting from 5 mA/cm$^2$ to 600 mA/cm$^2$. The range was divided into 40 steps wherein the voltage was recorded at each step for 10 seconds. Cut off voltage for termination of test was set at 1 V. Since, the stack had been operated for several hours during temperature and voltage profile studies polarization curve was obtained as soon the stack reached near 50 °C temperature All the tests were conducted at ambient pressure conditions. Polarization curve was obtained for a stack temperature range of 50-55 °C with hydrogen and air stoichiometry at 1.2 and 3 respectively. FIG 13 shows the comparison of polarization curves for different flow modes tested with a 5 cell stack. The co-flow mode demonstrated equal performance to the control for most of the operating voltage range. Inlet up configuration showed reduced performance due to higher evaporation rate of water produced at the cathode alone.

**Efficiency calculations:**

Efficiency of the stack has been calculated based on the theoretical potential obtained from the lower heating value of change in enthalpy for hydrogen-oxygen reaction. Therefore the efficiency of the fuel cell stack can be obtained by a simple formula:

$$\eta = \frac{Output\ power}{Theoretcial\ Power}$$

Fuel cell output power is obtained by the following relation:

$$P_a(Watts) = Current\ density\ (A/cm^2) \times Voltage\ (V) \times Active\ Area(cm^2)$$

Waste heat then can be calculated by the relation:

$$P_H(Watts) = J\ (A/cm^2) \times (V_{th} - V) \times No.\ of\ cells \times Active\ area\ (cm^2)$$

Theoretical output power is actually the sum of waste heat and fuel cell power output. It can also be calculated by a simple equation as mentioned below:

$$P_{th}(Watts) = V_{th} \times J\ (A/cm^2) \times No.\ of\ cells \times Active\ area(cm^2)$$

Table 2 documents the efficiency of various configurations studied during the thermal management experiments. It can be clearly observed that the heat generation rate increases with increase in current density. However, the efficiency goes down due to lower power output. FIG 14 represents a plot of efficiency versus current density. As expected, the efficiency decreases with increase in current density, for all configurations. However, it is to be noted that the efficiency with co-flow mode is nearly equal to the control setup. It is interesting to note that the efficiency falls rapidly for current densities above 400 mA/cm$^2$. This is attributed to the rapid drying of the membrane at the cathode side at increased gas flow rates apart from the increase in heat generation at higher current densities. Thus, finally it can be noted that co-flow mode is able to achieve cooling to some extent due to the water at room temperature being transported up the wick by air flow aided capillary action. This is further reflected in terms of improvement in efficiency of fuel cell stack with this configuration.

**Table 2:** Stack voltage, power and efficiency

| Configuration | Current Density (mA/cm$^2$) | Theoretical Stack Voltage (V$_{th}$) | Actual Stack Voltage (V) | Theoretical Power Output (P$_{th}$) | Actual Power Output (P$_o$) | Waste Heat Generated (P$_w$) | Efficiency $\eta$ (%) |
|---|---|---|---|---|---|---|---|
| Control | 200 | 6.15 | 3.21 | 123 | 64.2 | 58.8 | 52.20 |
| | 300 | 6.15 | 2.86 | 184.5 | 85.8 | 98.7 | 46.50 |
| | 400 | 6.15 | 2.63 | 246 | 105.2 | 140.8 | 42.76 |
| | 500 | 6.15 | 2.1 | 307.5 | 105 | 202.5 | 34.14 |
| Counter-flow | 200 | 6.15 | 3.23 | 123 | 64.6 | 58.4 | 52.52 |
| | 300 | 6.15 | 2.88 | 184.5 | 86.4 | 98.1 | 46.83 |
| | 400 | 6.15 | 2.54 | 246 | 101.6 | 144.4 | 41.3 |
| | 500 | 6.15 | 1.67 | 307.5 | 83.5 | 224 | 27.15 |
| Co-flow | 200 | 6.15 | 3.50 | 123 | 70 | 53 | 56.91 |
| | 300 | 6.15 | 3.22 | 184.5 | 96.6 | 87.9 | 52.36 |
| | 400 | 6.15 | 2.96 | 246 | 118.4 | 127.6 | 48.13 |
| | 500 | 6.15 | 2.43 | 307.5 | 121.5 | 186 | 39.51 |

**Advantages of the present invention:**

1. The present invention provides for a cost effective and easy scale up technique for internal humidification of inlet gas streams for LT-PEMFC.

2. The technique used in the present invention offers minimal parasitic power loss as compared to other conventional humidification techniques which make use of external humidifiers.

3. The technique used works well with any flow field that has a provision for providing gas flow from bottom to top unlike in other prior art which make use of wick based technique for water transport for internal humidification using mostly parallel flow field.

4. Use of electrically conducting and hydrophilic carbon cloth modified by acetone treatment is extremely befitting for water transport into the cell. Other materials like metal foam meshes, electrically conducting fabrics etc. can also be used but problems of leakage have to be checked. Usually materials with thickness less than 1 mm would suit for such technique.

5. The system can be further improvised to provide cooling of fuel cell. When the water from the porous wick surface encounters the hot dry gas, it evaporates producing cooling effect.

6. Such a technique would greatly reduce system complexity and size resulting in overall cost reduction.

7. The system prevents drying out of membrane for a range of current densities as the wick holds water in its voids which continuously supply the water to the membrane.

**Claims**

1. A wick based method of internally humidifying a low temperature proton exchange membrane fuel cell (LT-PEMFC) which comprises:

    a) electrically conducting and hydrophilic wicking material placed over the entire active area in different cell configurations with bottom portion dipped in the trough in order to facilitate capillary action for internal humidification;
    b) a trough for water transport up the wicking material;
    c) dry feed and ambient (28 - 30 ° C) temperature gas supply to either anode or cathode or both electrodes;
    d) counter and co-flow operation under different configurations;

    wherein the wicking material is electrically conducting and hydrophilic carbon cloth modified by acetone treatment.

2. The method as claimed in claim 1 wherein, the wick is placed over the electrode(s) and is sandwiched between the graphite plates and membrane electrode assembly (MEA).

3. The method as claimed in claims 1-2, wherein, the wicking material is less than 1mm in thickness.

4. The method as claimed in claims 1-3, wherein, the pore size of the wicking material is in range of 25 to 94 microns.

5. The method as claimed in claims 1-4, wherein, the average contact angle of the wicking material is 70-90 degrees.

6. The method as claimed in claims 1-5, wherein the wicking material removes variable heat loads by 8 - 11 %.

7. The method as claimed in claims 1-6, wherein the efficiency of proton exchange membrane fuel cell (PEFMC) is increased by 5 - 7 %.

8. The method as claimed in claims 1-7, which increases efficiency up to an area of 100 $cm^2$.

**Patentansprüche**

1.  Verfahren auf der Grundlage eines Dochts zum internen Befeuchten einer Niedertemperatur-Protonenaustauschmembran-Brennstoffzelle (low temperature proton exchange membrane fuel cell; LT PEMFC), das umfasst:

    a) elektrisch leitendes und hydrophiles Dochtmaterial, das über den gesamten aktiven Bereich in verschiedenen Zellenkonfigurationen platziert ist, wobei ein Bodenabschnitt in die Wanne eingetaucht ist, um eine Kapillarwirkung für eine interne Befeuchtung zu erleichtern;
    b) eine Wanne für einen Wassertransport das Dochtmaterial aufwärts;
    c) Trockeneinspeisung und Gaszufuhr bei Umgebungstemperatur (28 bis 30 °C) entweder zur Anode oder zur Kathode oder zu beiden Elektroden;
    d) Gegen- und Gleichflussbetrieb in verschiedenen Konfigurationen;

    wobei das Dochtmaterial ein elektrisch leitendes und hydrophiles Kohlenstoffgewebe ist, das durch Acetonbehandlung modifiziert ist.

2.  Verfahren nach Anspruch 1, wobei der Docht über der Elektrode bzw. den Elektroden platziert wird und zwischen den Graphitplatten und der Membranelektrodenanordnung (membrane electrode assembly; MEA) sandwichartig angeordnet ist.

3.  Verfahren nach den Ansprüchen 1 bis 2, wobei das Dochtmaterial eine Dicke von weniger als 1 mm aufweist.

4.  Verfahren nach den Ansprüchen 1 bis 3, wobei die Porengröße des Dochtmaterials im Bereich von 25 bis 94 $\mu$m liegt.

5.  Verfahren nach den Ansprüchen 1 bis 4, wobei der durchschnittliche Kontaktwinkel des Dochtmaterials 70 bis 90 Grad beträgt.

6.  Verfahren nach den Ansprüchen 1 bis 5, wobei das Dochtmaterial variable Wärmelasten um 8 bis 11 % beseitigt.

7.  Verfahren nach den Ansprüchen 1 bis 6, wobei der Wirkungsgrad der Protonenaustauschmembran-Brennstoffzelle (PEFMC) um 5 bis 7 % erhöht wird.

8.  Verfahren nach den Ansprüchen 1 bis 7, das den Wirkungsgrad bis zu einer Fläche von 100 cm$^2$ erhöht.

**Revendications**

1.  Procédé à base de mèche d'humidification interne d'une pile à combustible à membrane échangeuse de protons à basse température (low temperature proton exchange membrane fuel cell; LT PEMFC) qui comprend :

    a) un matériau à effet capillaire électriquement conducteur et hydrophile placé sur toute la zone active dans différentes configurations de pile avec une partie inférieure trempée dans la cuvette afin de faciliter une action capillaire pour une humidification interne ;
    b) une cuvette pour faire remonter de l'eau le long du matériau à effet capillaire;
    c) une alimentation en gaz à sec et à température ambiante (28 à 30 °C) soit vers l'anode, soit vers la cathode, soit vers l'une et l'autre des électrodes ;
    d) un mode de fonctionnement à co- et à contre-courant sous différentes configurations ;

    dans lequel le matériau à effet capillaire est un tissu de carbone électriquement conducteur et hydrophile modifié par traitement à l'acétone.

2.  Procédé tel que revendiqué dans la revendication 1, dans lequel la mèche est placée sur la ou les électrode(s) et est intercalée entre les plaques de graphite et l'ensemble membrane-électrode (membrane electrode assembly; MEA).

3.  Procédé tel que revendiqué dans les revendications 1 ou 2, dans lequel le matériau à effet capillaire a une épaisseur inférieure à 1 mm.

**4.** Procédé tel que revendiqué dans les revendications 1 à 3, dans lequel la taille de pores du matériau à effet capillaire est dans une plage de 25 à 94 micromètres.

**5.** Procédé tel que revendiqué dans les revendications 1 à 4, dans lequel l'angle de contact moyen du matériau à effet capillaire est de 70 à 90 degrés.

**6.** Procédé tel que revendiqué dans les revendications 1 à 5, dans lequel le matériau à effet capillaire élimine les charges thermiques variables de 8 à 11 %.

**7.** Procédé tel que revendiqué selon les revendications 1 à 6, dans lequel le rendement de la pile à combustible à membrane échangeuse de protons (PEFMC) est augmenté de 5 à 7 %.

**8.** Procédé tel que revendiqué dans les revendications 1 à 7, qui augmente le rendement jusqu'à une surface de 100 cm$^2$.

FIG.1
Prior Art

WICKING 12

27
28
26
AIR

11
24

12 WICKING
13 DIFFUSION LAYER
14 MEA
18 ANODE
21 SEPARATOR PLATE
20 NEXT CELL

AIR OUT
31

32
EXH
CONDENSER

33
RESERVOIR

22 WICKING HEADER

2
1

3
4
5
6

7

8

9

FIG 2

FIG. 3

FIG. 4

**FIG. 5**

**FIG. 6**

FIG. 7

FIG. 8

FIG. 9

FIG. 10

FIG. 11

FIG. 12

FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6960404 B
- EP 1530813 A
- EP 2016640 B1
- EP 1530813 B1
- US 20040170878 A
- US 4826741 A